# EUROPÄISCHE PATENTANMELDUNG

(11) **EP 4 664 402 A1**
(43) Veröffentlichungstag der Anmeldung: **17.12.2025**
(21) Anmeldenummer: 25176633.3
(22) Anmeldetag: 15.05.2025
(51) Int. Cl.: G06T 7/70, G06T 7/73

(54) **VORRICHTUNG ZUM BESTIMMEN DER FÖRDERRICHTUNG VON GEFÖRDERTEN OBJEKTEN**

(30) Priorität: 11.06.2024 DE 102024116279
(71) Anmelder: SICK AG, 79183 Waldkirch (DE)
(72) Erfinder: LAUER, Roman, 79111 Freiburg (DE)
(74) Vertreter: Manitz Finsterwald Patent- und Rechtsanwaltspartnerschaft mbB

(57) **Zusammenfassung**

Eine Vorrichtung zum Bestimmen der Förderrichtung von geförderten Objekten umfasst eine Bilderfassungseinrichtung zum Erfassen von Bildern der geförderten Objekte und eine elektronische Steuereinrichtung, die mit der Bilderfassungseinrichtung in Signalverbindung steht und dazu ausgebildet ist, mittels Bildanalyse eine Bewegungsrichtung der Objekte im Bezugssystem der Bilderfassungseinrichtung zu bestimmen. Die elektronische Steuereinrichtung ist dazu ausgebildet, in einem Kalibriermodus die Ausrichtung eines im Erfassungsbereich der Bilderfassungseinrichtung positionierten Kalibrierelements zu erkennen und anhand des erkannten Richtungssymbols im Bezugssystem der Bilderfassungseinrichtung eine globale Referenzrichtung festzulegen.

## Beschreibung

Die Erfindung betrifft eine Vorrichtung zum Bestimmen der Förderrichtung von geförderten Objekten, mit einer Bilderfassungseinrichtung zum Erfassen von Bildern der geförderten Objekte und mit einer elektronischen Steuereinrichtung, die mit der Bilderfassungseinrichtung in Signalverbindung steht und dazu ausgebildet ist, mittels Bildanalyse eine Bewegungsrichtung der Objekte im Bezugssystem der Bilderfassungseinrichtung zu bestimmen.

Solche Vorrichtungen werden beispielsweise beim Auf-, Ab- und Umladen von Waren auf Paletten eingesetzt. Insbesondere ist es in verschiedenen Bereichen der Logistik gewünscht, ankommende und abgehende Waren automatisiert zu identifizieren und voneinander zu unterscheiden.

Hierfür ist es erforderlich, die Förderrichtung in einem globalen Bezugssystem zu kennen. In Abhängigkeit von der Montageposition und der Ausrichtung der Bilderfassungseinrichtung besteht aber ein Unterschied zwischen der Förderrichtung im Bezugssystem der Bilderfassungseinrichtung und der Förderrichtung im globalen Bezugssystem, also zwischen der Förderrichtung in Bildkoordinaten und der Förderrichtung in Weltkoordinaten. Für eine Umrechnung kann ein Anwender eine manuelle Konfiguration vornehmen, zum Beispiel durch Eingabe von Parametern. Dies ist jedoch lästig und fehlerträchtig. Viele Anwender möchten sich nicht mit der Ausrichtung des Bezugssystems der Bilderfassungseinrichtung befassen.

Es ist eine Aufgabe der Erfindung, das Bestimmen der Förderrichtung von geförderten Objekten zu vereinfachen.

Die Lösung der Aufgabe erfolgt durch eine Vorrichtung mit den Merkmalen des Anspruchs 1.

Erfindungsgemäß ist die elektronische Steuereinrichtung dazu ausgebildet, in einem Kalibriermodus die Ausrichtung eines im Erfassungsbereich der Bilderfassungseinrichtung positionierten Kalibrierelements zu erkennen und anhand der erkannten Ausrichtung im Bezugssystem der Bilderfassungseinrichtung eine globale Referenzrichtung festzulegen.

Der Anwender ist somit in der Lage, bei der Inbetriebnahme der Vorrichtung die globale Referenzrichtung unabhängig von der Einbaulage der Bilderfassungseinrichtung selbst festzulegen. Er muss sich keine Gedanken über den Zusammenhang zwischen Bildkoordinaten und Weltkoordinaten machen. Die Festlegung der globalen Referenzrichtung kann einfach, schnell und intuitiv erfolgen. In vielen Fällen ist ohnehin eine Kalibrierung der Bilderfassungseinrichtung mittels eines Kalibrierelements vorzunehmen, um eine Ableitung zuverlässiger geometrischer Informationen aus den erfassten Bildern zu ermöglichen. Dieser Kalibriervorgang kann in vorteilhafter Weise dazu genutzt werden, die globale Referenzrichtung durch eine entsprechende Ausrichtung des Kalibrierelements festzulegen. Die Inbetriebnahme einer erfindungsgemäßen Vorrichtung ist daher besonders schnell und einfach. Zudem ist die Fehleranfälligkeit verringert.

Vorzugsweise ist die elektronische Steuereinrichtung dazu ausgebildet, die Förderrichtung der geförderten Objekte in einem globalen Bezugssystem zu bestimmen, indem die Bewegungsrichtung der Objekte im Bezugssystem der Bilderfassungseinrichtung in einen Bezug zu der im Kalibriermodus festgelegten globalen Referenzrichtung gesetzt wird, zumindest in einem Betriebsmodus oder Normalmodus der Vorrichtung. Das heißt die Vorrichtung bestimmt die Förderrichtung nicht oder nicht nur im Bildkoordinatensystem, sondern im Weltkoordinatensystem. Somit ist sichergestellt, dass die tatsächliche Förderrichtung der Objekte in Bezug auf den Ursprungsort und den Zielort als Förderrichtung ermittelt wird. Der Anwender weiß also ohne weitere Überlegungen, ob zum Beispiel ein bestimmtes Objekt von einem Lagerplatz weg oder zu einem Lagerplatz hin gefördert wird.

Die elektronische Steuereinrichtung kann dazu ausgebildet sein, einen Bewegungswinkel zwischen der Bewegungsrichtung der Objekte im Bezugssystem der Bilderfassungseinrichtung und der im Kalibriermodus festgelegten globalen Referenzrichtung zu berechnen. Dies ermöglicht eine besonders einfache Umrechnung zwischen dem Bezugssystem der Bilderfassungseinrichtung und dem globalen Bezugssystem. Insbesondere können auf diese Weise Bewegungen, die nicht parallel zu den Bildkoordinatenachsen verlaufen, vereinfacht ausgewertet werden. Jeder Unterschied zwischen der Förderrichtung in Bildkoordinaten und der Förderrichtung in Weltkoordinaten kann durch einen Winkelbetrag im Bereich zwischen Null und 360 ° angegeben werden.

Gemäß einer Ausführungsform der Erfindung ist die elektronische Steuereinrichtung dazu ausgebildet, einer Bewegung des Objekts in der globalen Referenzrichtung einen Bewegungswinkel von Null zuzuweisen. Das heißt die globale Referenzrichtung stimmt mit dem abgebildeten Richtungssymbol des Kalibrierelements überein. Dem Anwender ist somit beim Positionieren des Kalibrierelements unmittelbar klar, wohin während des Betriebs der Vorrichtung die globale Referenzrichtung weist.

Die elektronische Steuereinrichtung kann dazu ausgebildet sein, die Ausrichtung des Kalibrierelements durch Auslesen einer Richtungsinformation aus einem auf dem Kalibrierelement befindlichen Codemuster zu erkennen. Bei dem Codemuster kann es sich um ein Strichcodemuster oder um ein Matrixcodemuster handeln.

Eine weitere Ausführungsform der Erfindung sieht vor, dass die Objekte mittels wenigstens einer Fördereinrichtung von einer ersten Ladezone zu einer zweiten Ladezone oder in umgekehrter Richtung von der zweiten Ladezone zu der ersten Ladezone zu fördern und in einer der Ladezonen abzustellen sind und die elektronische Steuereinrichtung dazu ausgebildet ist, anhand der bestimmten Förderrichtung entweder die erste Ladezone oder die zweite Ladezone als Abstellort festzulegen. In vielen Anwendungssituationen besteht der Wunsch, den endgültigen Abstellort von transportierten Waren automatisiert festzustellen. Die Festlegung einer der beiden Ladezonen als Abstellort kann beispielsweise eine übergeordnete Steuereinheit bei der Planung der Warenströme unterstützen. Als Fördereinrichtung kann ein Gabelstapler, ein Hubwagen, ein Roboter, ein Band-, Riemen- oder Rollenförderer oder eine Anordnung aus mehreren solcher Fördermittel vorgesehen sein.

Gemäß einer weiteren Ausführungsform der Erfindung ist die erste Ladezone einem Transportfahrzeug und die zweite Ladezone einem Lagerraum zugeordnet. Bei dem Transportfahrzeug kann es sich insbesondere um einen Lastkraftwagen handeln, mit dem Waren in ein Lager geliefert werden. Für den Betreiber des Lagers ist es von Vorteil, zu wissen, ob die aktuell gehandhabte Ware in den Lastkraftwagen oder in den Lagerraum gebracht wird.

Die elektronische Steuereinrichtung kann mit einer Anzeige in Signalverbindung stehen und dazu ausgebildet sein, in dem Kalibriermodus eine Anweisung dafür anzuzeigen, das Kalibrierelement so im Erfassungsbereich der Bilderfassungseinrichtung zu positionieren, dass ein auf dem Kalibrierelement befindliches Richtungssymbol in Richtung der ersten Ladezone oder in Richtung der zweiten Ladezone weist. Die Inbetriebnahme der Vorrichtung ist dadurch weiter vereinfacht, weil der Benutzer mittels der Anzeige zur korrekten Kalibrierung angeleitet wird. Er kann auswählen, ob die Vorgabe für die globale Referenzrichtung "in Richtung erste Ladezone" oder "in Richtung zweite Ladezone" ist.

Bevorzugt ist die elektronische Steuereinrichtung dazu ausgebildet, die Bewegungsrichtung eines Objekts im Bezugssystem der Bilderfassungseinrichtung anhand einer Änderung von Positionskoordinaten des Objekts in nacheinander erfassten Bildern zu bestimmen. Die Bewegungsrichtung im Bild kann über die zeitliche Positionsänderung besonders einfach bestimmt werden. Vorzugsweise ist die Bilderfassungseinrichtung dazu ausgebildet, in regelmäßigen zeitlichen Abständen Bilder des Erfassungsbereichs zu erfassen.

Die elektronische Steuereinrichtung kann dazu ausgebildet sein, die Objekte anhand optischer Merkmale wie Codemuster oder Symbole zu identifizieren. Beispielsweise kann auf jedes der zu fördernden Objekte ein Strichcode oder ein Matrixcode aufgebracht sein. Die Identifizierung erleichtert die Handhabung der Objekte in vielfältiger Weise. Da die Objektidentifizierung einerseits und die Richtungsbestimmung andererseits mit ein und derselben Bilderfassungseinrichtung bewerkstelligt wird, die Bilderfassungseinrichtung also eine Doppelfunktion erfüllt, ist der Gesamtaufbau der Vorrichtung relativ einfach und kostengünstig.

Gemäß einer weiteren Ausführungsform der Erfindung umfasst die Vorrichtung das Kalibrierelement. Der Benutzer kann den Kalibriervorgang somit jederzeit durchführen.

Es kann ein Richtungssymbol, insbesondere ein Pfeil, auf das Kalibrierelement aufgebracht sein. Dies ermöglicht eine besonders intuitive Festlegung der globalen Referenzrichtung. Grundsätzlich könnte aber auch ein anderes Zeichen mit ableitbarer Richtung als Richtungssymbol auf das Kalibrierelement aufgebracht sein, beispielsweise ein Gefahrgutzeichen.

Gemäß einer weiteren Ausführungsform ist ein Codemuster mit einer Richtungsinformation auf das Kalibrierelement aufgebracht, wobei die Richtungsinformation einerseits sowie das Richtungssymbol andererseits übereinstimmende Richtungen angeben. Das Codemuster kann auch zusätzliche objektspezifische Informationen beinhalten.

Weiterhin kann auf dem Kalibrierelement ein gleichmäßiges Muster wie zum Beispiel ein Schachbrettmuster aufgebracht sein. Ein solches Muster erleichtert insbesondere die Kompensation von Verzerrungen bei der Abbildung.

Die Erfindung betrifft auch ein Verfahren zum Bestimmen der Förderrichtung von geförderten Objekten, insbesondere mittels einer Vorrichtung wie vorstehend beschrieben, mit den Schritten:
Erfassen von Bildern der geförderten Objekte mittels einer Bilderfassungseinrichtung, und
Bestimmen der Bewegungsrichtung der Objekte im Bezugssystem der Bilderfassungseinrichtung mittels Bildanalyse.

Erfindungsgemäß ist vorgesehen, dass in einem Kalibriervorgang ein Kalibrierelement im Erfassungsbereich der Bilderfassungseinrichtung positioniert wird, die Ausrichtung des Kalibrierelements mittels Bildanalyse erkannt wird und anhand des erkannten Ausrichtung im Bezugssystem der Bilderfassungseinrichtung eine globale Referenzrichtung festgelegt wird.

Dadurch kann der Anwender bei der Inbetriebnahme der Vorrichtung die globale Referenzrichtung unabhängig von der Einbaulage der Bilderfassungseinrichtung selbst festlegen.

Ein erfindungsgemäßes Verfahren kann Schritte umfassen, die den vorstehend in Bezug auf die Ausgestaltung der elektronischen Steuereinrichtung angegebenen Merkmalen entsprechen.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine vereinfachte Seitenansicht einer erfindungsgemäßen Vorrichtung zum Bestimmen der Förderrichtung von geförderten Objekten.
- Fig. 2: zeigt einen Bildsensor einer Bilderfassungseinrichtung der Vorrichtung gemäß Fig. 1.
- Fig. 3: zeigt ein Markierungselement zum Kalibrieren der Vorrichtung gemäß Fig. 1.

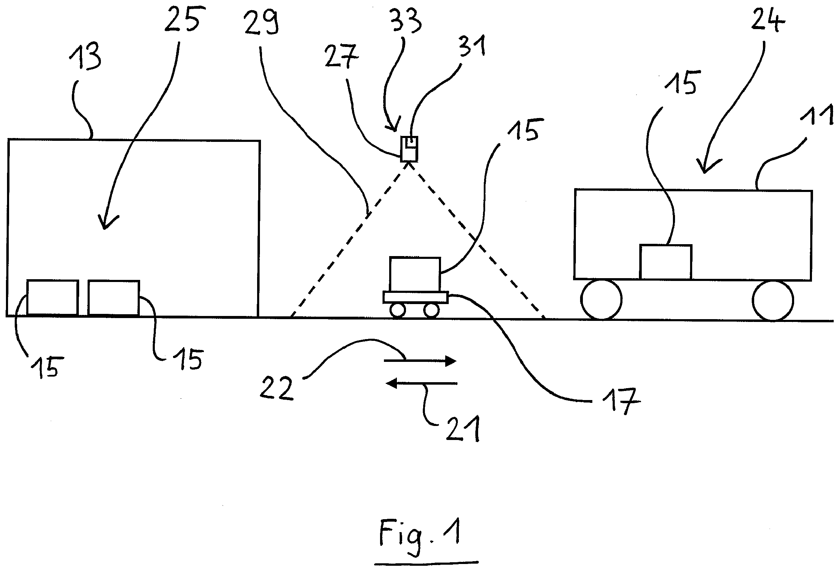

In Fig. 1 ist ein Transportfahrzeug 11 in der Umgebung eines Lagerraums 13 gezeigt. Mittels des Transportfahrzeugs 11 werden Objekte 15 wie zum Beispiel Warenpaletten angeliefert oder abtransportiert. Für das Umladen der Objekte 15 ist eine Fördereinrichtung 17 vorgesehen, beispielsweise ein Gabelstapler, ein Hubwagen oder ein Roboter. Mittels der Fördereinrichtung 17 können die Objekte 15 in einer ersten Förderrichtung 21 von dem Transportfahrzeug 11 zum Lagerraum 13 oder in einer entgegengesetzten zweiten Förderrichtung 22 vom Lagerraum 13 zum Transportfahrzeug 11 gefördert und dann abgestellt werden. Somit bildet die Ladefläche des Transportfahrzeugs 11 eine erste Ladezone 24, während der Abstellbereich des Lagerraums 13 eine zweite Ladezone 25 bildet.

Eine optoelektronische Bilderfassungseinrichtung 27 wie zum Beispiel eine Matrixkamera ist derart in der Umgebung des Lagerraums 13 angeordnet, dass sie während des Fördervorgangs Bilder der Objekte 15 erfassen kann. Der Erfassungsbereich 29 der Bilderfassungseinrichtung 27 befindet sich bei dem dargestellten Ausführungsbeispiel zwischen dem Transportfahrzeug 11 und dem Lagerraum 13, könnte sich bei bestimmten Anwendungen jedoch auch vollständig im Transportfahrzeug 11 oder im Lagerraum 13 befinden.

Die Bilderfassungseinrichtung 27 ist mit einer elektronischen Steuereinrichtung 31 verbunden, die für eine Bildanalyse der erfassten Bilder ausgebildet ist. Bei der gezeigten Ausführungsform sind die Bilderfassungseinrichtung 27 und die elektronische Steuereinrichtung 31 in einem gemeinsamen Gehäuse untergebracht. Die elektronische Steuereinrichtung 31 ist dazu ausgebildet, die Objekte 15 anhand von aufgebrachten graphischen Codemustern wie Matrixcodes (in Fig. 1 nicht erkennbar) zu identifizieren, um so beispielsweise die Art der geförderten Waren festzustellen.

Die Anordnung aus der Bilderfassungseinrichtung 27 und der elektronischen Steuereinrichtung 31 bildet auch eine Vorrichtung 33 zum Bestimmen der Förderrichtung 21, 22 der geförderten Objekte 15. Diese Vorrichtung 33 kann erkennen, ob ein Objekt 15 in der ersten Förderrichtung 21 oder in der zweiten Förderrichtung 22 gefördert wird, so dass ein Anwender Kenntnis darüber erlangt, ob sich das Objekt 15 nach dem Fördervorgang im Transportfahrzeug 11 oder im Lagerraum 13 befindet.

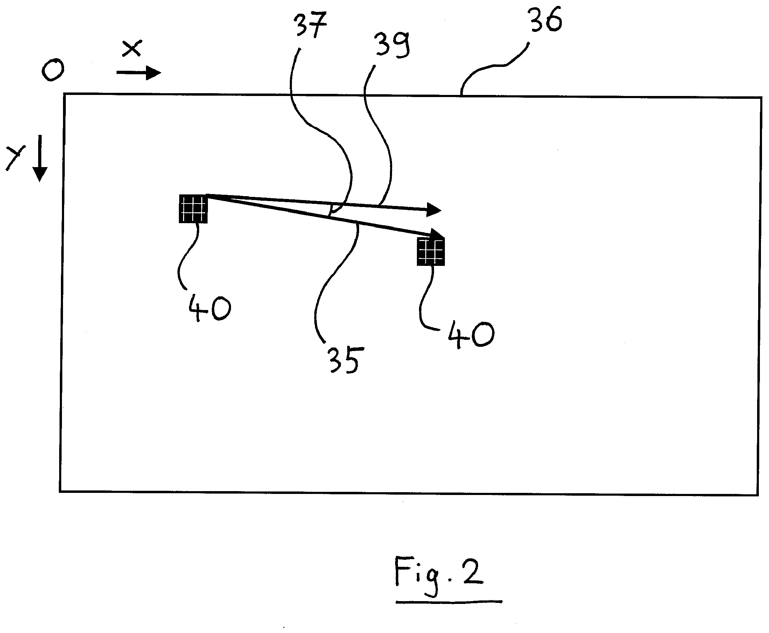

Zu diesem Zweck bestimmt die elektronische Steuereinrichtung 31 zunächst wie in Fig. 2 gezeigt die Bewegungsrichtung 35 des gerade geförderten Objekts 15 im Bezugssystem der Bilderfassungseinrichtung 27, das heißt im Bezugssystem des Bildsensors 36, indem die Änderung der Positionskoordinaten des Objekts 15, speziell des erkannten Codemusters 40, in nacheinander erfassten Bildern bestimmt wird. In Fig. 2 ist dies durch zwei Darstellungen des gleichen Codemusters 40 zu verschiedenen Zeitpunkten veranschaulicht.

Anschließend bestimmt die elektronische Steuereinrichtung 31 anhand der Bewegungsrichtung 35 die Förderrichtung 21, 22 in einem globalen Bezugssystem. Hierfür wird der Bewegungswinkel 37 zwischen der Bewegungsrichtung 35 und einer festgelegten globalen Referenzrichtung 39 bestimmt. Es ergibt sich ein Bewegungswinkel 37 von 0 °, wenn die Bewegungsrichtung 35 mit der globalen Referenzrichtung 39 übereinstimmt, und ein Bewegungswinkel 37 von 180 °, wenn die Bewegungsrichtung 35 zur globalen Referenzrichtung 39 entgegengesetzt ist. Wenn der bestimmte Bewegungswinkel 37 in einem vorgegebenen Bereich um 0 ° liegt, beispielsweise in einem Bereich zwischen -5° und 5°, bestimmt die elektronische Steuereinrichtung 31 die erste Förderrichtung 21 als globale Förderrichtung und legt den Lagerraum 13 als Abstellort fest. Wenn der bestimmte Bewegungswinkel 37 in einem vorgegebenen Bereich um 180 ° liegt, beispielsweise in einem Bereich zwischen 175 ° und 185°, bestimmt die elektronische Steuereinrichtung 31 die zweite Förderrichtung 22 als globale Förderrichtung und legt das Transportfahrzeug 11 als Abstellort fest. Der festgelegte Abstellort kann als Signal an eine übergeordnete Steuerung ausgegeben und/oder auf einer Anzeige angezeigt werden.

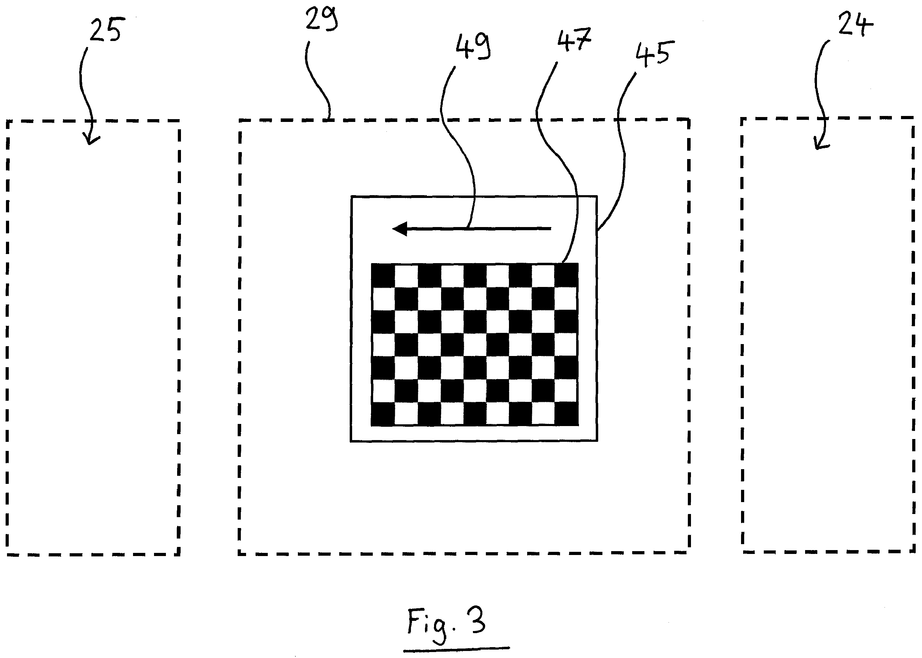

Um bei der Inbetriebnahme der Vorrichtung 33 eine einfache und schnelle Festlegung der globalen Referenzrichtung 39 vornehmen zu können, ist die elektronische Steuereinrichtung 31 dazu ausgebildet, ein Kalibrierverfahren auszuführen, wie nachfolgend unter Bezugnahme auf Fig. 3 genauer beschrieben wird.

Wenn sich die elektronische Steuereinrichtung 31 in einem Kalibriermodus befindet, wird mittels einer nicht dargestellten Anzeige der Vorrichtung 33 der Benutzer angewiesen, ein Kalibrierelement 45 im Erfassungsbereich 29 der Bilderfassungseinrichtung 27 zu positionieren. Wie gezeigt weist das Kalibrierelement 45 ein Schachbrettmuster 47 sowie ein Richtungssymbol 49, hier in Form eines Pfeils, auf. Kalibrierelemente 45 der dargestellten Art werden allgemein dazu verwendet, die Abbildungsgeometrie der Bilderfassungseinrichtung zu ermitteln, wobei das Richtungssymbol 49 dem Benutzer die korrekte Ausrichtung des Kalibrierelements 45 anzeigt. Zusätzlich zu dem Richtungssymbol 49 und dem Schachbrettmuster 47 kann sich ein Codemuster ähnlich dem Codemuster 40 gemäß Fig. 2 auf dem Kalibrierelement 45 befinden, was in Fig. 3 jedoch nicht gezeigt ist. Bei der erfindungsgemäßen Vorrichtung 33 wird der Benutzer angewiesen, das Kalibrierelement 45 derart auszurichten, dass das Richtungssymbol 49 in Richtung des Transportfahrzeugs 11 oder in Richtung des Lagerraums 13, also in Richtung der ersten Ladezone 24 oder in Richtung der zweiten Ladezone 25, weist.

Nach dem Positionieren des Kalibrierelements 45 und gegebenenfalls nach einer entsprechenden Bestätigung durch den Benutzer erkennt die elektronische Steuereinrichtung 31 die Ausrichtung des Kalibrierelements 45, beispielsweise durch Auslesen einer Richtungsinformation aus dem Codemuster und/oder anhand des Richtungssymbols 49, und legt die globale Referenzrichtung 39 so fest, gegebenenfalls durch Abspeichern, dass sie mit der durch das Richtungssymbol 49 definierten Richtung übereinstimmt. Anschließend wird der Benutzer angewiesen, das Kalibrierelement 45 wieder aus dem Erfassungsbereich 29 zu entfernen und vom Kalibriermodus in den Betriebsmodus zu wechseln.

Das Richten des Richtungssymbols 49 auf das Transportfahrzeug 11 oder auf den Lagerraum 13 ist für den Benutzer einfach und intuitiv. Insbesondere muss sich der Benutzer nicht mit der Ausrichtung des Bildsensors 36 befassen.

### Bezugszeichenliste:

- 11: Transportfahrzeug
- 13: Lagerraum
- 15: Objekt
- 17: Fördereinrichtung
- 21: erste Förderrichtung
- 22: zweite Förderrichtung
- 24: erste Ladezone
- 25: zweite Ladezone
- 27: Bilderfassungseinrichtung
- 29: Erfassungsbereich
- 31: elektronische Steuereinrichtung
- 33: Vorrichtung zum Bestimmen der Förderrichtung
- 35: Bewegungsrichtung
- 36: Bildsensor
- 37: Bewegungswinkel
- 39: globale Referenzrichtung
- 40: Codemuster
- 45: Kalibrierelement
- 47: Schachbrettmuster
- 49: Richtungssymbol

## Patentansprüche

1. Vorrichtung (33) zum Bestimmen der Förderrichtung (21, 22) von geförderten Objekten (15),
mit einer Bilderfassungseinrichtung (27) zum Erfassen von Bildern der geförderten Objekte (15) und einer elektronischen Steuereinrichtung (31), die mit der Bilderfassungseinrichtung (27) in Signalverbindung steht und dazu ausgebildet ist, mittels Bildanalyse eine Bewegungsrichtung (35) der Objekte (35) im Bezugssystem der Bilderfassungseinrichtung (27) zu bestimmen,
wobei die elektronische Steuereinrichtung (31) dazu ausgebildet ist, in einem Kalibriermodus die Ausrichtung eines im Erfassungsbereich (29) der Bilderfassungseinrichtung (27) positionierten Kalibrierelements (45) zu erkennen und anhand der erkannten Ausrichtung im Bezugssystem der Bilderfassungseinrichtung (27) eine globale Referenzrichtung (39) festzulegen.

2. Vorrichtung nach Anspruch 1,
wobei die elektronische Steuereinrichtung (31) dazu ausgebildet ist, die Förderrichtung (21, 22) der geförderten Objekte (15) in einem globalen Bezugssystem zu bestimmen, indem die Bewegungsrichtung (35) der Objekte (15) im Bezugssystem der Bilderfassungseinrichtung (27) in einen Bezug zu der im Kalibriermodus festgelegten globalen Referenzrichtung (39) gesetzt wird.

3. Vorrichtung nach Anspruch 2,
wobei die elektronische Steuereinrichtung (31) dazu ausgebildet ist, einen Bewegungswinkel (37) zwischen der Bewegungsrichtung (35) der Objekte (15) im Bezugssystem der Bilderfassungseinrichtung (27) und der im Kalibriermodus festgelegten globalen Referenzrichtung (39) zu berechnen.

4. Vorrichtung nach Anspruch 3,
wobei die elektronische Steuereinrichtung (31) dazu ausgebildet ist, einer Bewegung des Objekts (15) in der globalen Referenzrichtung (39) einen Bewegungswinkel (37) von Null zuzuweisen.

5. Vorrichtung nach einem der vorstehenden Ansprüche,
wobei die elektronische Steuereinrichtung (31) dazu ausgebildet ist, die Ausrichtung des Kalibrierelements (45) durch Auslesen einer Richtungsinformation aus einem auf dem Kalibrierelement (45) befindlichen Codemuster zu erkennen.

6. Vorrichtung nach einem der vorstehenden Ansprüche,
wobei die Objekte (15) mittels wenigstens einer Fördereinrichtung (17) von einer ersten Ladezone (24) zu einer zweiten Ladezone (25) oder in umgekehrter Richtung von der zweiten Ladezone (25) zu der ersten Ladezone (24) zu fördern und in einer der Ladezonen (24, 25) abzustellen sind und
wobei die elektronische Steuereinrichtung (31) dazu ausgebildet ist, anhand der bestimmten Förderrichtung (21, 22) entweder die erste Ladezone (24) oder die zweite Ladezone (25) als Abstellort festzulegen.

7. Vorrichtung nach Anspruch 6,
wobei die erste Ladezone (24) einem Transportfahrzeug (11) und die zweite Ladezone (25) einem Lagerraum (13) zugeordnet ist.

8. Vorrichtung nach Anspruch 6 oder 7,
wobei die elektronische Steuereinrichtung (31) mit einer Anzeige in Signalverbindung steht und dazu ausgebildet ist, in dem Kalibriermodus eine Anweisung anzuzeigen, das Kalibrierelement (45) so im Erfassungsbereich (29) der Bilderfassungseinrichtung (27) zu positionieren, dass ein auf dem Kalibrierelement (45) befindliches Richtungssymbol (49) in Richtung der ersten Ladezone (24) oder in Richtung der zweiten Ladezone (25) weist.

9. Vorrichtung nach einem der vorstehenden Ansprüche,
wobei die elektronische Steuereinrichtung (31) dazu ausgebildet ist, die Bewegungsrichtung (35) eines Objekts (15) im Bezugssystem der Bilderfassungseinrichtung (27) anhand einer Änderung von Positionskoordinaten des Objekts (15) in nacheinander erfassten Bildern zu bestimmen.

10. Vorrichtung nach einem der vorstehenden Ansprüche,
wobei die elektronische Steuereinrichtung (31) dazu ausgebildet ist, die Objekte (15) anhand optischer Merkmale wie Codemuster (40) oder Symbole zu identifizieren.

11. Vorrichtung nach einem der vorstehenden Ansprüche,
wobei die Vorrichtung (33) das Kalibrierelement (45) umfasst.

12. Vorrichtung nach Anspruch 11,
wobei ein Richtungssymbol (49), insbesondere ein Pfeil, auf das Kalibrierelement (45) aufgebracht ist.

13. Vorrichtung nach Anspruch 12,
wobei ein Codemuster mit einer Richtungsinformation auf das Kalibrierelement (45) aufgebracht ist und wobei die Richtungsinformation einerseits sowie das Richtungssymbol (49) andererseits übereinstimmende Richtungen angeben.

14. Vorrichtung nach einem der Ansprüche 11 bis 13,
wobei auf dem Kalibrierelement (45) ein gleichmäßiges Muster wie zum Beispiel ein Schachbrettmuster (47) aufgebracht ist.

15. Verfahren zum Bestimmen der Förderrichtung (21, 22) von geförderten Objekten (15), insbesondere mittels einer Vorrichtung (33) gemäß einem der vorstehenden Ansprüche, mit den Schritten:
Erfassen von Bildern der geförderten Objekte (15) mittels einer Bilderfassungseinrichtung (27), und
Bestimmen der Bewegungsrichtung (35) der Objekte (15) im Bezugssystem der Bilderfassungseinrichtung (27) mittels Bildanalyse,
wobei in einem Kalibriervorgang ein Kalibrierelement (45) im Erfassungsbereich (29) der Bilderfassungseinrichtung (27) positioniert wird, die Ausrichtung des Kalibrierelements (45) mittels Bildanalyse erkannt wird und anhand der erkannten Ausrichtung im Bezugssystem der Bilderfassungseinrichtung (27) eine globale Referenzrichtung (39) festgelegt wird.
